# DEMANDE DE BREVET EUROPEEN

(11) **EP 0 913 293 A1**
(43) Date de publication de la demande: **06.05.1999**
(21) Numéro de dépôt: 98402687.2
(22) Date de dépôt: 28.10.1998
(51) Int. Cl.: B60N 2/22

(54) **Mécanisme d'articulation pour siège de véhicule, et siège de véhicule équipé d'un tél mécanisme**

(30) Priorité: 31.10.1997 FR 9713702
(71) Demandeur: BERTRAND FAURE EQUIPEMENTS S.A., 92100 Boulogne (FR)
(72) Inventeur: Baloche, François, 61100 La Carneille (FR); Benoit, Jean-Romain, 14110 S/Noireau (FR)
(74) Mandataire: Burbaud, Eric

(57) **Abrégé**

Il s'agit d'un mécanisme d'articulation comportant un flasque fixe (10), un flasque mobile (11) verrouillable par deux grains (14) commandés par un poussoir coulissant (20), lui-même actionné par pivotement d'une plaque de commande (26) dans un premier ou un deuxième sens pour libérer le flasque mobile. Un guide circulaire (43) comporte des interruptions radiales (41) recevant les grains, et maintient les grains en position effacée lorsqu'ils se dégagent des interruptions radiales sous l'effet du pivotement de la plaque de commande dans le deuxième sens, ce qui solidarise par ailleurs le guide circulaire avec le flasque mobile. Le flasque mobile peut ainsi tourner librement avant de se reverrouiller dans sa position angulaire initiale lorsque les interruptions radiales du guide circulaire reviennent en face des grains.

## Description

La présente invention est relative aux mécanismes d'articulation pour sièges de véhicules, et aux sièges de véhicules équipés de tels mécanismes.

Plus particulièrement, l'invention concerne un mécanisme d'articulation destiné à équiper un siège de véhicule qui comprend d'une part une assise et d'autre part un dossier pivotant par rapport à l'assise, ce mécanisme comportant :
- des premier et deuxième flasques destinés à être solidarisés l'un avec l'assise et l'autre avec le dossier, ces flasques étant montés pivotants l'un par rapport à l'autre autour d'un axe de rotation, le deuxième flasque étant solidarisé de façon permanente avec une denture qui s'étend sur au moins un arc de cercle centré sur l'axe de rotation et qui est orientée radialement vers l'intérieur,
- au moins un grain de verrouillage doté d'une denture propre à coopérer avec la denture du deuxième flasque, ce grain de verrouillage étant guidé en coulissement radial par un guide solidaire du premier flasque, entre d'une part une position d'engagement où la denture du grain de verrouillage coopère avec la denture du deuxième flasque pour bloquer le mécanisme, et d'autre part une position effacée où la denture du grain de verrouillage ne coopère pas avec la denture du deuxième flasque, ce grain de verrouillage comportant en outre un premier pion faisant saillie axialement vers le deuxième flasque,
- un organe de verrouillage pour commander le coulissement du grain de verrouillage, cet organe de verrouillage étant sollicité par des moyens élastiques vers une position de repos où ledit organe de verrouillage place le grain de verrouillage dans sa position d'engagement, et ledit organe de verrouillage étant déplaçable jusqu'à une position d'actionnement où il permet au grain de verrouillage de coulisser vers sa position effacée,
- un organe de manoeuvre pour déplacer l'organe de verrouillage de sa position de repos vers une position d'actionnement où ledit organe de verrouillage permet au grain de verrouillage de coulisser vers sa position effacée,
- des moyens pour déplacer le grain de verrouillage radialement vers l'intérieur quand l'organe de verrouillage est en position d'actionnement,
- et un guide circulaire qui est en liaison mécanique avec le deuxième flasque et qui coopère avec le premier pion de façon à maintenir positivement le grain de verrouillage dans sa position effacée lorsque ce grain de verrouillage est dans une plage prédéterminée de positions angulaires par rapport audit guide circulaire, ce guide circulaire présentant au moins une interruption dans laquelle peut s'engager le premier pion lorsque le grain de verrouillage n'est pas dans ladite plage prédéterminée de positions angulaires, en permettant alors au grain de verrouillage de coulisser radialement vers l'extérieur jusqu'à sa position d'engagement.

Le document EP-A-0 770 514 décrit un exemple d'un tel mécanisme d'articulation, qui peut rester déverrouillé même après lâcher de l'organe de commande lorsqu'on bascule le dossier du siège vers l'avant, par exemple pour accéder aux places arrière du véhicule si le mécanisme en question est monté sur un siège avant. Lorsqu'on relève ensuite le dossier, le mécanisme se reverrouille automatiquement dès que le premier pion arrive en face de l'interruption correspondante du guide circulaire.

Le mécanisme décrit dans ce document donne toute satisfaction, mais présente toutefois l'inconvénient de se reverrouiller toujours dans la même position angulaire du dossier lorsqu'on relève ce dossier après l'avoir basculé vers l'avant, et ce indépendamment du réglage antérieur dudit dossier.

L'utilisateur du siège doit donc régler à nouveau l'inclinaison de son dossier à chaque fois qu'il le relève après l'avoir basculé vers l'avant.

Par ailleurs, le document EP-A-0 694 434 décrit un mécanisme d'articulation à grains dentés qui permet de basculer vers l'avant le dossier du siège et qui se reverrouille automatiquement dans la position préalablement réglée du dossier : ce mécanisme fonctionne parfaitement, mais les gains dentés de ce mécanisme, qui permettent de régler l'inclinaison du dossier, viennent en prise avec une denture qui est elle-même mobile par rapport au deuxième flasque et qui est solidarisable avec ce deuxième flasque par l'intermédiaire d'autres grains dentés.

Dans ce cas, les deux flasques sont donc reliés l'un à l'autre par l'intermédiaire de deux étages de grains dentés, ce qui tend à rendre le mécanisme plus lourd et plus complexe.

La présente invention a donc pour but de proposer un mécanisme d'articulation du genre de celui décrit dans le document EP-A-0 770 514, mais qui puisse se reverrouiller automatiquement dans la dernière position réglée du dossier du siège lorsque ce dossier est relevé après avoir été basculé vers l'avant, et ce en conservant un seul étage de grains dentés.

A cet effet, selon l'invention, un dispositif du genre en question est essentiellement caractérisé en ce que :
- le guide circulaire est formé par un bord radialement intérieur appartenant à un équipage dit de mémorisation qui est monté pivotant par rapport aux premier et deuxième flasques autour de l'axe de rotation,
- cet équipage de mémorisation comporte un premier guide radial qui communique avec l'interruption du guide circulaire, le premier pion pouvant coulisser radialement dans ce guide, sensiblement sans jeu dans la direction circonférentielle,
- l'équipage de mémorisation comporte en outre un deuxième guide radial et un grain dit de mémorisation doté d'une denture propre à coopérer avec la denture du deuxième flasque, le grain de mémorisation étant monté coulissant dans le deuxième guide radial entre d'une part, une position d'engagement où ce grain de mémorisation coopère avec la denture du deuxième flasque pour immobiliser l'équipage de mémorisation par rapport à ce deuxième flasque, et d'autre part une position effacée où le grain de mémorisation ne coopère pas avec la denture du deuxième flasque et permet une rotation relative entre l'équipage de mémorisation et le deuxième flasque,
- une plaque de commande liée à l'organe de manoeuvre est montée pivotante autour de l'axe de rotation, cette plaque de commande étant déplaçable à partir d'une position de repos, soit dans un premier sens angulaire jusqu'à une première position active, soit dans un deuxième sens angulaire jusqu'à une deuxième position active, cette plaque de commande étant sollicitée élastiquement vers sa position de repos, ladite plaque de commande coopérant avec le grain de verrouillage pour empêcher ce grain de verrouillage de se déplacer radialement vers l'intérieur jusqu'à un point où le premier pion pourrait se dégager de son guide radial lorsque la plaque de commande est dans sa première position active, et pour permettre au grain de verrouillage de se déplacer radialement vers l'intérieur jusqu'à une position où le premier pion peut se dégager de son guide radial pour glisser contre le guide circulaire lorsque la plaque de commande est dans sa deuxième position active,
- l'organe de verrouillage est monté coulissant par rapport au premier flasque et est en liaison mécanique avec la plaque de commande, pour que l'organe de verrouillage repousse la plaque de commande dans sa position de repos lorsque ledit organe de verrouillage se trouve lui-même dans sa position de repos, et pour que la plaque de commande repousse l'organe de verrouillage dans sa position d'actionnement lorsque ladite plaque de commande se trouve dans l'une de ses positions actives,
- la plaque de commande coopère avec le grain de mémorisation pour maintenir ce grain dans sa position d'engagement lorsque ladite plaque de commande est déplacée dans sa deuxième position active sans rotation relative entre les premier et deuxième flasques, et pour permettre au grain de mémorisation de se déplacer dans sa position effacée lorsque ladite plaque de commande est déplacée vers sa première position active,
- et, lorsque la plaque de commande est placée dans sa deuxième position active et que le deuxième flasque a subi une rotation relative par rapport au premier flasque dans un sens angulaire prédéterminé, dit sens de basculement, le grain de mémorisation coopère avec un guide en arc de cercle qui est centré sur l'axe de rotation et qui est solidaire du premier flasque pour maintenir alors le grain de mémorisation dans sa position d'engagement, de sorte que l'équipage de mémorisation suit alors le deuxième flasque, le grain de mémorisation ne coopérant pas avec le guide en arc de cercle lorsque le premier pion du grain de verrouillage se trouve en correspondance avec le premier guide radial.

Grâce à ces dispositions, lorsque l'utilisateur du siège veut régler l'inclinaison de son dossier, il agit sur l'organe de manoeuvre dans le premier sens, ce qui débloque le grain de verrouillage, qui reste solidaire de l'équipage de mémorisation.

En revanche, lorsque l'utilisateur du siège veut basculer le dossier vers l'avant au maximum, il agit sur l'organe de manoeuvre dans le deuxième sens, ce qui non seulement débloque le grain de verrouillage, mais permet également au premier pion de ce grain de se dégager de son guide radial. Dans le même temps, le grain de mémorisation est maintenu en prise avec la denture du deuxième flasque, en bloquant l'équipage de mémorisation dans la position correspondant à la dernière position réglée du dossier du siège.

Lorsque le dossier bascule ensuite vers l'avant, le guide circulaire appartenant à l'équipage de mémorisation coulisse contre le premier pion du grain de verrouillage, en maintenant ledit grain de verrouillage dans sa position effacée, même après lâcher de l'organe de manoeuvre.

Par la suite, lorsque le dossier est basculé vers l'arrière, le guide circulaire de la plaque de mémorisation coulisse à nouveau contre le premier pion, jusqu'à ce que le premier guide radial arrive au niveau du premier pion du grain de verrouillage, ce qui permet au grain de verrouillage de revenir en prise avec la denture du deuxième flasque : le dossier est ainsi à nouveau verrouillé dans la position initialement réglée par l'utilisateur.

Dans des modes de réalisation préférés de l'invention, on peut éventuellement avoir recours en outre à l'une et/ou à l'autre des dispositions suivantes :
- le grain de verrouillage comporte un deuxième pion qui fait saillie axialement vers le deuxième flasque et la plaque de commande comporte des première et deuxième échancrures disposées de part et d'autre du deuxième pion, la première échancrure étant adaptée pour recevoir ledit deuxième pion lorsque la plaque de commande est déplacée dans sa première position active, ladite première échancrure comportant un bord de came orienté radialement vers l'intérieur qui coopère alors avec le deuxième pion pour repousser le grain de verrouillage vers sa position effacée, et la première échancrure comportant en outre un bord de butée orienté radialement vers l'extérieur qui empêche le premier pion de sortir du premier guide radial lorsque la plaque de commande est dans sa première position active, la deuxième échancrure étant adaptée pour recevoir ledit deuxième pion lorsque la plaque de commande est déplacée dans sa deuxième position active, et ladite deuxième échancrure comportant un bord de came orienté radialement vers l'intérieur qui coopère alors avec le deuxième pion pour repousser le grain de verrouillage vers sa position effacée en faisant sortir le premier pion du premier guide radial ;
- le mécanisme comporte deux grains de verrouillage identiques qui sont disposés symétriquement par rapport à l'organe de verrouillage ;
- l'organe de verrouillage coopère avec les deux grains de verrouillage par effet de coin pour les repousser vers leur position d'engagement ;
- l'organe de verrouillage comporte deux doigts qui font saillie axialement vers le deuxième flasque et qui pénètrent respectivement dans deux découpes ménagées dans la plaque de commande, ces deux découpes présentant chacune sensiblement une forme en arc de cercle centré sur l'axe de rotation, et lesdites découpes comportant chacune une extrémité angulaire pourvue d'un bord qui est adjacent au doigt correspondant de l'organe de verrouillage lorsque ledit organe de verrouillage et la plaque de commande sont dans leurs positions de repos respectives ;
- l'organe de manoeuvre comprend un arbre central sur lequel coulisse l'organe de verrouillage, ledit organe de verrouillage coulissant en outre dans un guide solidaire du premier flasque ;
- le grain de mémorisation comporte un pion qui fait saillie axialement vers le deuxième flasque et sur lequel agit un bord d'appui extérieur appartenant à la plaque de commande lorsque ladite plaque de commande est déplacée dans sa deuxième position active sans rotation relative entre les premier et deuxième flasques, pour maintenir alors le grain de mémorisation en position d'engagement ;
- le guide en arc de cercle qui coopère avec le grain de mémorisation comprend un rebord qui est orienté radialement vers l'extérieur, contre lequel coulisse un rebord qui est orienté radialement vers l'intérieur et qui appartient au grain de mémorisation ;
- le guide circulaire qui coopère avec le premier pion du grain de verrouillage présente une butée faisant saillie radialement vers l'intérieur au niveau de l'interruption de ce guide circulaire, uniquement d'un côté de ladite interruption, de façon que, lorsque le premier pion du grain de verrouillage sort du premier guide radial, le deuxième flasque puisse pivoter dans le sens angulaire de basculement par rapport au premier flasque, puis dans un sens angulaire opposé, jusqu'à ce que le premier pion du grain de verrouillage rencontre ladite butée du guide circulaire, après quoi ledit premier pion peut s'engager à nouveau dans le premier guide radial.

Par ailleurs, l'invention a également pour objet un siège de véhicule comprenant d'une part, une assise et d'autre part, un dossier monté pivotant sur l'assise au moyen d'au moins un mécanisme d'articulation tel que défini ci-dessus, dont les premier et deuxième flasques sont solidarisés l'un avec l'assise et l'autre avec le dossier.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique d'un siège de véhicule équipé d'un mécanisme d'articulation selon une forme de réalisation de l'invention ;
- la figure 2 est une vue éclatée partielle du mécanisme d'articulation équipant le siège de la figure 1 ;
- la figure 3 est une vue en coupe axiale du mécanisme de la figure 2, en position verrouillée ;
- les figures 4 à 6 sont des vues en coupe, respectivement selon les lignes IV-IV, V-V et VI-VI, du mécanisme de la figure 3, également en position verrouillée ;
- les figures 7 à 9 sont des vues similaires au figures 4 à 6, montrant l'état du dispositif pendant un réglage d'inclinaison du dossier du siège ;
- les figures 10 à 12 sont des vues similaires aux figures 4 à 6, lorsque le mécanisme est actionné pour permettre un rabattement complet du dossier du siège vers l'avant, mais avant que ce rabattement n'ait lieu ;
- et les figures 12 à 15 sont des vues similaires aux figures 10 à 12, pendant le rabattement du dossier vers l'avant.

Sur les différentes figures, les mêmes références désignent des éléments identiques ou similaires.

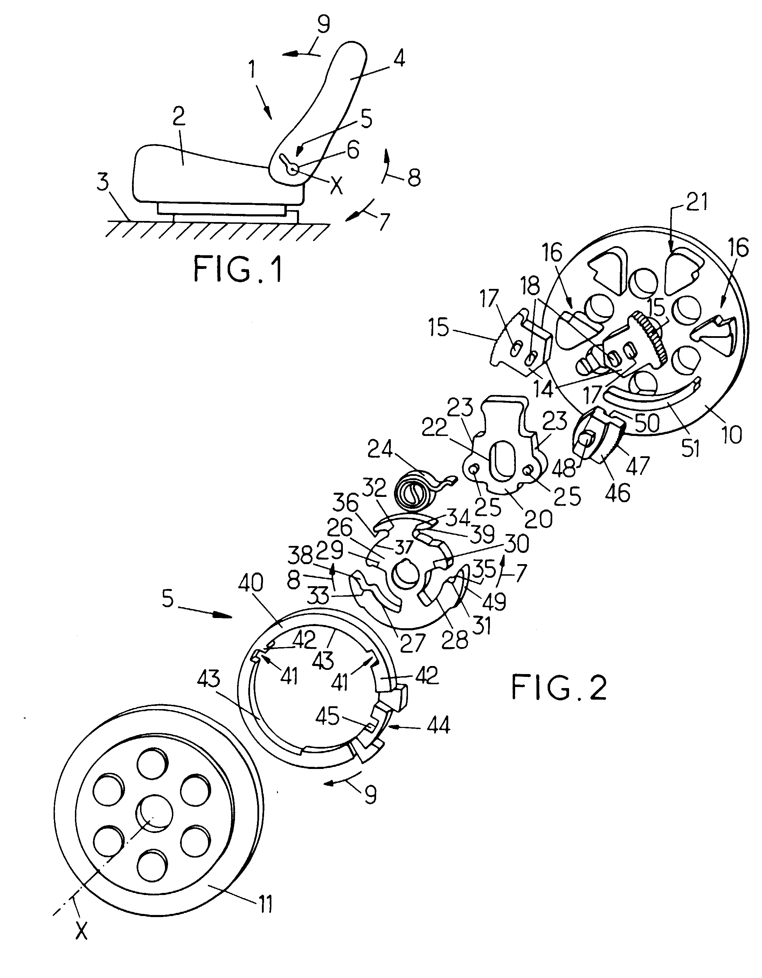

Comme représenté schématiquement sur la figure 1, l'invention concerne un siège de véhicule 1, notamment un siège avant de véhicule automobile, qui comporte d'une part une assise 2 montée sur le plancher 3 du véhicule, et d'autre part un dossier 4 monté pivotant sur l'assise 2 autour d'un axe horizontal transversal X.

Ce montage pivotant du dossier 4 est réalisé au moyen d'au moins un mécanisme d'articulation 5 commandé par une poignée 6, et de préférence au moyen de deux mécanismes d'articulation identiques ou similaires disposés de part et d'autre du dossier et commandés par la même poignée 6.

Le pivotement de ladite poignée 6 dans un sens angulaire 7 permet à un utilisateur de régler l'inclinaison du dossier 4, en agissant directement sur ce dossier, tandis que le pivotement de la poignée 6 dans le sens angulaire opposé 8 permet de rabattre le dossier 4 complètement vers l'avant, dans la direction 9, notamment pour faciliter l'accès aux places arrière du véhicule lorsque ce véhicule ne comporte que deux portières avant.

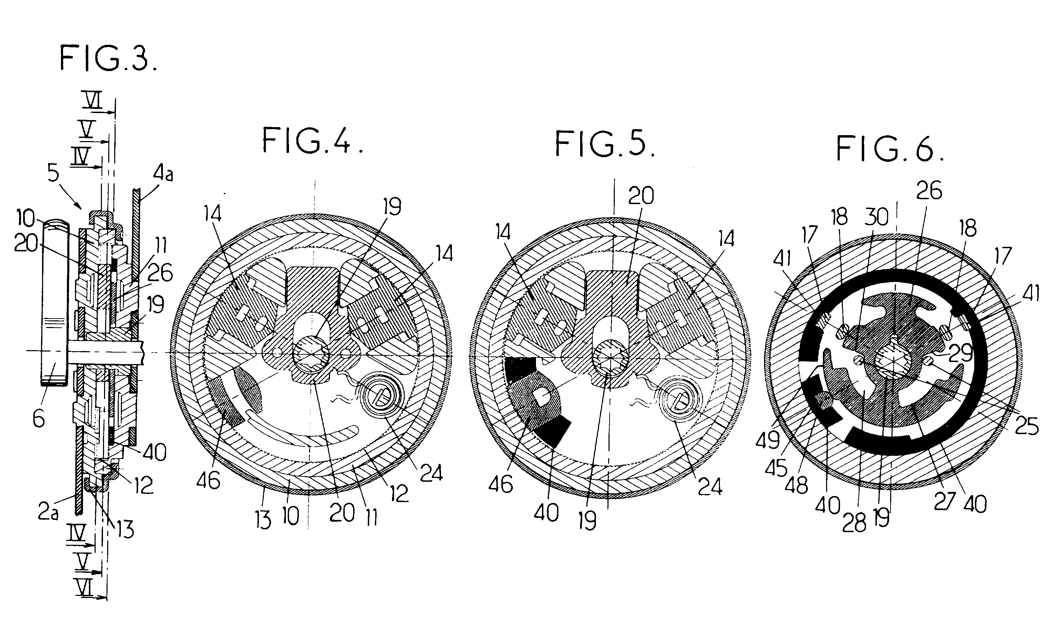

Comme représenté sur les figures 2 et 3, le mécanisme d'articulation 5 comporte :
- un flasque métallique fixe 10 perpendiculaire à l'axe X, qui est solidarisé avec 1 'armature rigide 2a de l'assise ;
- un flasque métallique mobile 11 perpendiculaire à l'axe X, qui est solidarisé avec l'armature rigide 4a du dossier et qui est pourvu d'une denture circulaire intérieure 12 centrée sur l'axe X ;
- une couronne métallique 13, qui est sertie sur le pourtour des flasques fixes et mobiles en délimitant avec ceux-ci un boîtier circulaire fermé ;
- deux grains métalliques de verrouillage 14 qui sont disposés sensiblement à 120° l'un de l'autre et qui présentent chacun une denture extérieure 15 adaptée pour venir en prise avec la denture 12 du flasque mobile, chacun de ces grains étant monté coulissant radialement dans un guide 16 solidaire du flasque fixe, entre d'une part une position d'engagement où la denture 15 du grain coopère avec la denture 12 du flasque mobile pour bloquer le mécanisme, et d'autre part une position effacée où le grain 14 ne coopère pas avec la denture 12 du flasque mobile, chacun des grains 14 comportant en outre des premiers et deuxièmes pions 17, 18 faisant saillie axialement vers le flasque mobile 11, le deuxième pion 18 étant disposé radialement vers l'intérieur du premier pion 17 ;
- un arbre de commande 19 qui est monté pivotant selon l'axe X et qui est solidarisé avec la poignée 6 ;
- un organe de verrouillage 20 qui se présente sous la forme d'une plaque métallique découpée et estampée disposée dans le même plan que les grains de verrouillage 14, cet organe de verrouillage étant monté coulissant radialement dans un guide 21 solidaire du flasque fixe 10, dans une direction de coulissement correspondant à la médiane des directions de coulissement des grains de verrouillage 14, et l'organe de commande étant percé d'un trou oblong 22 qui s'étend longitudinalement dans la direction de coulissement dudit organe de verrouillage et qui est traversé par une partie circulaire de l'arbre de commande 19, l'organe de verrouillage 20 comportant en outre deux surfaces d'appui latérales 23 qui sont conformées pour repousser les grains de verrouillage 14 vers leur position d'engagement par effet de coin, lorsque l'organe de verrouillage 20 est repoussé radialement vers l'extérieur, vers une position de repos, sous l'action d'un ressort 24 monté sur le flasque fixe 10, et l'organe de verrouillage 20 comportant enfin deux pions 25 qui font saillie axialement vers le flasque mobile 11 et qui sont disposés de part et d'autre du trou oblong 22 ;
- une plaque de commande métallique 26 découpée qui s'étend dans un plan parallèle à l'organe de verrouillage 20 et qui est interposée entre cet organe de verrouillage et le flasque mobile 11, la plaque de commande 26 étant solidarisée en rotation avec l'arbre de commande 19, la plaque de commande 26 comportant deux découpes 27, 28 en arc de cercle qui sont centrées sur l'axe de rotation X et qui reçoivent chacune l'un des pions 25 de l'organe de verrouillage, chacune de ces découpes présentant un bord d'extrémité, respectivement 29,30, qui agit sur le pion 25 correspondant pour repousser l'organe de verrouillage 20 radialement vers l'intérieur jusqu'à une position d'actionnement lorsque la poignée 6 est tournée dans l'un ou l'autre des sens angulaires 7,8, ce qui permet alors aux grains de verrouillage 14 de coulisser vers leur position effacée, la plaque de commande 26 comportant en outre, de part et d'autre du deuxième pion 18 de chaque grain de verrouillage 14, une première échancrure, respectivement 31,32, et une deuxième échancrure, respectivement 33,34, chacune des premières échancrures 31, 32 présentant un bord de came orienté radialement vers l'intérieur, respectivement 35,36, qui est adapté pour agir sur le deuxième pion 18 du grain 14 correspondant afin de déplacer ce grain vers sa position effacée lorsque la poignée 6 tourne dans le sens angulaire 7, et au moins l'une 32 des premières échancrures présentant en outre un bord de butée orienté radialement vers l'extérieur qui est adapté pour coopérer avec le deuxième pion 18 du grain de verrouillage correspondant, pour limiter le déplacement de ce grain radialement vers l'intérieur, et chacune des deuxièmes échancrures 33,34 comportant par ailleurs un bord de came, respectivement 38,39, coopérant avec les deuxièmes pions 18 des grains 14 pour déplacer ces grains vers leur position effacée lorsque la poignée 6 tourné dans le sens angulaire 8,
- un équipage de mémorisation 40, qui se présente sous la forme d'un anneau métallique découpé et estampé disposé autour de la plaque de commande 26, cet équipage de mémorisation comportant intérieurement deux encoches 41 qui constituent chacune un guide radial pour le premier pion 17 du grain de verrouillage 14 correspondant, l'équipage de mémorisation 40 comportant en outre deux butées 42 faisant saillie radialement vers l'intérieur et adjacentes respectivement aux deux encoches 41, les butées 42 étant situées toutes les deux du même côté de leur encoche 41 respective, l'équipage de mémorisation 40 comportant en outre deux guides circulaires 43 orientés radialement vers l'intérieur et s'étendant chacun sur un peu moins de 120° à partir d'une des encoches 41, à l'opposé de la butée 42 correspondante, et l'équipage de mémorisation 40 comportant en outre un guide radial 44 réalisé par estampage, associé à une encoche 45 orientée radialement vers l'intérieur,
- et un grain de mémorisation 46 métallique qui est monté coulissant dans le guide radial 44 de l'équipage de mémorisation et qui est doté d'une denture extérieure 47 propre à coopérer avec la denture intérieure 12 du flasque mobile lorsque ledit grain de mémorisation se trouve dans une position d'engagement, le grain de mémorisation comportant en outre un pion 48 logé dans l'encoche 45 de l'équipage de mémorisation, qui fait saillie vers le flasque mobile 11 et qui peut coopérer avec un bord d'appui extérieur 49 de la plaque de commande 26 pour maintenir le grain de mémorisation 46 dans sa position d'engagement lorsque ladite plaque de commande tourne dans le sens angulaire 8, et le grain de mémorisation 46 comportant en outre une rainure 50 en arc de cercle centré sur l'axe X, qui vient s'engager sur une nervure 51 en arc de cercle également centré sur l'axe X lorsque le dossier est rabattu dans la direction 9, pour maintenir alors le grain de mémorisation 46 dans sa position d'engagement.

Le dispositif qui vient d'être décrit fonctionne comme suit.

En position de repos, comme représenté sur les figures 4 à 6, l'organe de verrouillage 20 est maintenu dans sa position de repos par le ressort 24, en repoussant les deux grains de verrouillage 14 vers leur position d'engagement, et en maintenant également la plaque de commande 26 dans sa position de repos par coopération entre les pions 25 de l'organe de verrouillage et les bords d'extrémité 29,30 de la plaque de commande.

De plus, dans cette position, le bord extérieur 49 de la plaque de commande 26 agit sur le pion 48 du grain de mémorisation 46 pour maintenir également ce grain de mémorisation dans sa position d'engagement.

Par ailleurs, dans cette position, les premiers pions 17 des grains de verrouillage se trouvent alors dans les encoches 41 de l'équipage de mémorisation 40, et le pion 48 du grain de mémorisation se trouve dans l'encoche 45 dudit équipage.

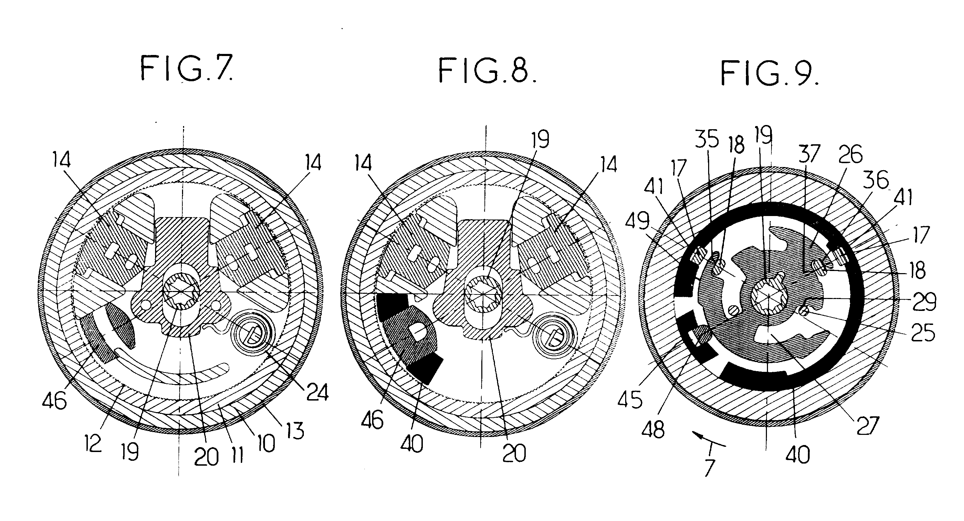

Lorsque l'utilisateur du siège 1 souhaite régler l'inclinaison du dossier, il actionne la poignée 6 dans le sens angulaire 7, comme représenté sur les figures 7 à 9.

La plaque de commande 26 pivote alors dans la direction 7 et le bord d'extrémité 29 de la découpe 27 appuie sur le pion 25 correspondant de l'organe de verrouillage 20, ce qui déplace cet organe vers sa position d'actionnement en permettant aux deux grains de verrouillage 14 de coulisser radialement vers l'intérieur jusqu'à leur position effacée.

Ce mouvement des deux grains de verrouillage 14 est d'ailleurs commandé positivement par la coopération entre les bords de came 35,36 de la plaque de commande et les pions 18 des deux grains de verrouillage, tandis que le bord de butée 37 de la plaque de commande empêche le pion 17 de l'un des grains de verrouillage de sortir de l'encoche 41 correspondante.

Par ailleurs, dans cette position, le bord extérieur d'appui 49 de la plaque de commande ne se trouve plus en face du pion 48 du grain de mémorisation, de sorte que ce grain de mémorisation peut coulisser radialement vers l'intérieur jusqu'à une position effacée dès lors qu'un couple de pivotement est appliqué au dossier, le pion 48 restant néanmoins engagé dans l'encoche 45 de l'équipage de mémorisation.

Lorsque l'utilisateur agit sur le dossier 4 pour en régler l'inclinaison, l'équipage de mémorisation reste donc solidaire du flasque fixe 10 par l'intermédiaire d'au moins un des pions 17, tandis que le flasque mobile 11 tourne librement tant que la poignée 6 est maintenue actionnée.

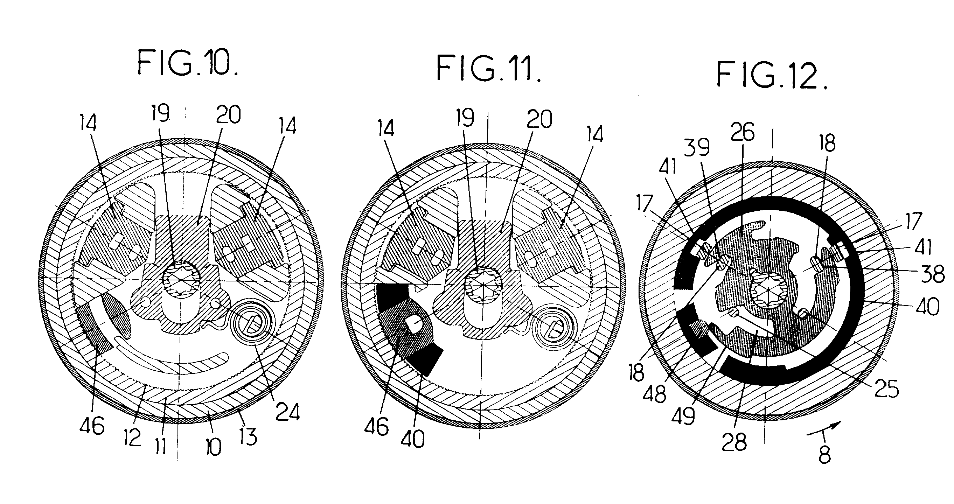

Par ailleurs, lorsque l'utilisateur du siège souhaite rabattre le dossier 4 complètement vers l'avant, dans la direction de basculement 9, il actionne la poignée 6 dans le sens angulaire 8, comme représenté sur les figures 10 à 12.

La plaque de commande 26 tourne alors dans le sens angulaire 8, de sorte que le bord d'extrémité 30 de la découpe 28 appuie sur le pion 25 correspondant en déplaçant l'organe de verrouillage dans sa position d'actionnement.

De plus, les bords de came 38,39 de la plaque de commande agissent alors sur les pions 18 des grains de verrouillage 14 pour déplacer ces grains radialement vers l'intérieur, suffisamment pour faire sortir les pions 17 des grains de verrouillage hors des encoches 41 de l'équipage de mémorisation.

Enfin, dans cette position, le bord extérieur d'appui de la plaque de commande 26 coopère toujours avec le pion 48 du grain de mémorisation, en maintenant ce grain de mémorisation en prise avec la denture intérieure 12 du flasque mobile.

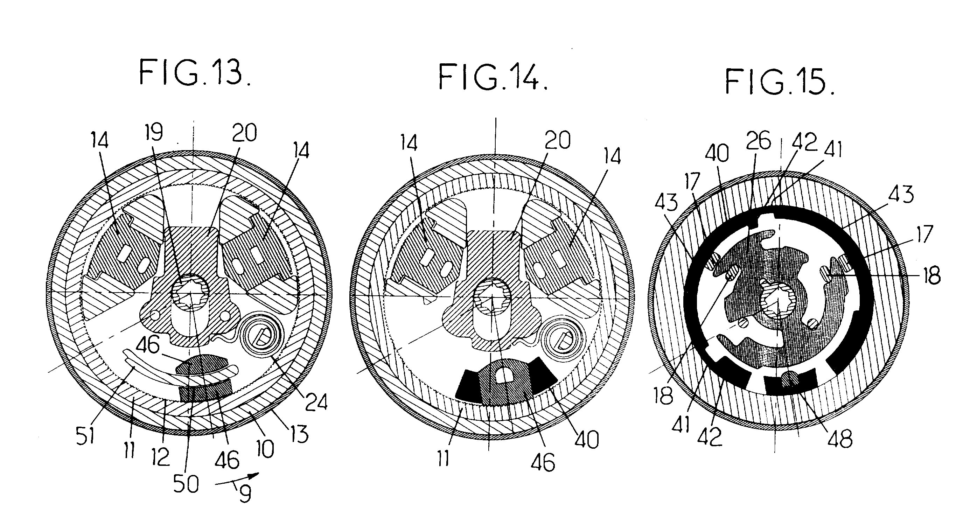

Lorsqu'on fait ensuite basculer le dossier dans la direction 9, comme représenté sur les figures 13 à 15, l'équipage de mémorisation 40 tourne avec le flasque mobile 11, le grain de mémorisation 46 étant maintenu en prise avec la denture intérieure 12 du flasque mobile par engagement de la rainure 50 dudit grain sur la nervure 51 en arc de cercle du flasque fixe.

Dans le même temps, les grains de verrouillage sont maintenus dans leur position effacée par coopération entre les guides circulaires 43 de l'équipage de mémorisation, et les pions 17 des grains de verrouillage, ce qui maintient également l'organe de verrouillage 20 en position d'actionnement, même après lâcher de la poignée 6.

Lorsque l'utilisateur relève le dossier 4 du siège après rabattement vers l'avant, les butées 42 de l'équipage de mémorisation arrêtent le mouvement de relèvement du dossier dès que les pions 17 se trouvent en face des encoches 41, après quoi ces pions s'engagent à nouveau dans lesdites encoches et le mécanisme se reverrouille dans la position représentée sur les figures 4 à 6, en retrouvant la position angulaire préalablement réglée par l'utilisateur.

## Revendications

1. Mécanisme d'articulation destiné à équiper un siège de véhicule (1) qui comprend d'une part une assise (2) et d'autre part un dossier (4) pivotant par rapport à l'assise, ce mécanisme comportant :
- des premier et deuxième flasques (10,11) destinés à être solidarisés l'un avec l'assise (2) et l'autre avec le dossier (4), ces flasques étant montés pivotants l'un par rapport à l'autre autour d'un axe de rotation (X), le deuxième flasque (11) étant solidarisé de façon permanente avec une denture (12) qui s'étend sur au moins un arc de cercle centré sur l'axe de rotation (X) et qui est orientée radialement vers l'intérieur,
- au moins un grain de verrouillage (14) doté d'une denture (15) propre à coopérer avec la denture (12) du deuxième flasque, ce grain de verrouillage étant guidé en coulissement radial par un guide (16) solidaire du premier flasque (10), entre d'une part une position d'engagement où la denture du grain de verrouillage coopère avec la denture du deuxième flasque pour bloquer le mécanisme, et d'autre part une position effacée où la denture du grain de verrouillage ne coopère pas avec la denture du deuxième flasque, ce grain de verrouillage comportant en outre un premier pion (17) faisant saillie axialement vers le deuxième flasque (11),
- un organe de verrouillage (20) pour commander le coulissement du grain de verrouillage (14), cet organe de verrouillage étant sollicité par des moyens élastiques (24) vers une position de repos où ledit organe de verrouillage place le grain de verrouillage (14) dans sa position d'engagement, et ledit organe de verrouillage étant déplaçable jusqu'à une position d'actionnement où il permet au grain de verrouillage de coulisser vers sa position effacée,
- un organe de manoeuvre (19) pour déplacer l'organe de verrouillage (20) de sa position de repos vers une position d'actionnement où ledit organe de verrouillage permet au grain de verrouillage (14) de coulisser vers sa position effacée,
- des moyens (35,36,38,39) pour déplacer le grain de verrouillage (14) radialement vers l'intérieur quand l'organe de verrouillage (20) est en position d'actionnement,
- et un guide circulaire (43) qui est en liaison mécanique avec le deuxième flasque (11) et qui coopère avec le premier pion (17) de façon à maintenir positivement le grain de verrouillage (14) dans sa position effacée lorsque ce grain de verrouillage est dans une plage prédéterminée de positions angulaires par rapport audit guide circulaire, ce guide circulaire présentant au moins une interruption dans laquelle peut s'engager le premier pion (17) lorsque le grain de verrouillage (14) n'est pas dans ladite plage prédéterminée de positions angulaires, en permettant alors au grain de verrouillage de coulisser radialement vers l'extérieur jusqu'à sa position d'engagement,
**caractérisé en ce que** :
- le guide circulaire (43) est formé par un bord radialement intérieur appartenant à un équipage dit de mémorisation (40) qui est monté pivotant par rapport aux premier et deuxième flasques (10,11) autour de l'axe de rotation (X),
- cet équipage de mémorisation (40) comporte un premier guide radial (41) qui communique avec l'interruption du guide circulaire, le premier pion (17) pouvant coulisser radialement dans ce guide, sensiblement sans jeu dans la direction circonférentielle,
- l'équipage de mémorisation (40) comporte en outre un deuxième guide radial (44) et un grain dit de mémorisation (46) doté d'une denture (47) propre à coopérer avec la denture (12) du deuxième flasque, le grain de mémorisation (46) étant monté coulissant dans le deuxième guide radial (44) entre d'une part, une position d'engagement où ce grain de mémorisation coopère avec la denture (12) du deuxième flasque pour immobiliser l'équipage de mémorisation (40) par rapport à ce deuxième flasque, et d'autre part une position effacée où le grain de mémorisation (46) ne coopère pas avec la denture (12) du deuxième flasque et permet une rotation relative entre l'équipage de mémorisation (40) et le deuxième flasque (11),
- une plaque de commande (26) liée à l'organe de manoeuvre (19) est montée pivotante autour de l'axe de rotation (X), cette plaque de commande étant déplaçable à partir d'une position de repos, soit dans un premier sens angulaire (7) jusqu'à une première position active, soit dans un deuxième sens angulaire (8) jusqu'à une deuxième position active, cette plaque de commande étant sollicitée élastiquement vers sa position de repos, ladite plaque de commande coopérant avec le grain de verrouillage (14) pour empêcher ce grain de verrouillage de se déplacer radialement vers l'intérieur jusqu'à un point où le premier pion (17) pourrait se dégager de son guide radial (41) lorsque la plaque de commande est dans sa première position active, et pour permettre au grain de verrouillage (14) de se déplacer radialement vers l'intérieur jusqu'à une position où le premier pion (17) peut se dégager de son guide radial (41) pour glisser contre le guide circulaire (43) lorsque la plaque de commande est dans sa deuxième position active,
- l'organe de verrouillage (20) est monté coulissant par rapport au premier flasque (10) et est en liaison mécanique avec la plaque de commande (26), pour que l'organe de verrouillage repousse la plaque de commande dans sa position de repos lorsque ledit organe de verrouillage se trouve lui-même dans sa position de repos, et pour que la plaque de commande repousse l'organe de verrouillage dans sa position d'actionnement lorsque ladite plaque de commande se trouve dans l'une de ses positions actives,
- la plaque de commande (26) coopère avec le grain de mémorisation (46) pour maintenir ce grain dans sa position d'engagement lorsque ladite plaque de commande est déplacée dans sa deuxième position active sans rotation relative entre les premier et deuxième flasques (10,11), et pour permettre au grain de mémorisation (46) de se déplacer dans sa position effacée lorsque ladite plaque de commande est déplacée vers sa première position active,
- et, lorsque la plaque de commande (26) est placée dans sa deuxième position active et que le deuxième flasque (11) a subi une rotation relative par rapport au premier flasque (10) dans un sens angulaire prédéterminé, dit sens de basculement (9), le grain de mémorisation (46) coopère avec un guide en arc de cercle (51) qui est centré sur l'axe de rotation (X) et qui est solidaire du premier flasque (10), pour maintenir alors le grain de mémorisation dans sa position d'engagement, de sorte que l'équipage de mémorisation (40) suit alors le deuxième flasque (11), le grain de mémorisation (46) ne coopérant pas avec le guide en arc de cercle (51) lorsque le premier pion (17) du grain de verrouillage se trouve en correspondance avec le premier guide radial (41).

2. Mécanisme d'articulation selon la revendication 1, dans lequel le grain de verrouillage (14) comporte un deuxième pion (18) qui fait saillie axialement vers le deuxième flasque (11) et la plaque de commande (26) comporte des première et deuxième échancrures (31;33,34) disposées de part et d'autre du deuxième pion (18), la première échancrure (31) étant adaptée pour recevoir ledit deuxième pion lorsque la plaque de commande (26) est déplacée dans sa première position active, ladite première échancrure comportant un bord de came (36) orienté radialement vers l'intérieur qui coopère alors avec le deuxième pion (18) pour repousser le grain de verrouillage (14) vers sa position effacée, et la première échancrure comportant en outre un bord de butée (37) orienté radialement vers l'extérieur qui empêche le premier pion (17) de sortir du premier guide radial lorsque la plaque de commande (26) est dans sa première position active, la deuxième échancrure (33,34) étant adaptée pour recevoir ledit deuxième pion lorsque la plaque de commande (26) est déplacée dans sa deuxième position active, et ladite deuxième échancrure comportant un bord de came (38,39) orienté radialement vers l'intérieur qui coopère alors avec le deuxième pion (18) pour repousser le grain de verrouillage (14) vers sa position effacée en faisant sortir le premier pion (17) du premier guide radial (41).

3. Mécanisme d'articulation selon la revendication 1 ou la revendication 2, comportant deux grains de verrouillage (14) identiques qui sont disposés symétriquement par rapport à l'organe de verrouillage (20).

4. Mécanisme d'articulation selon la revendication 3, dans lequel l'organe de verrouillage (20) coopère avec les deux grains de verrouillage (14) par effet de coin pour les repousser vers leur position d'engagement.

5. Mécanisme d'articulation selon l'une quelconque des revendications précédentes, dans lequel l'organe de verrouillage (20) comporte deux doigts (25) qui font saillie axialement vers le deuxième flasque (11) et qui pénètrent respectivement dans deux découpes (27,28) ménagées dans la plaque de commande, ces deux découpes présentant chacune sensiblement une forme en arc de cercle centré sur l'axe de rotation (X), et lesdites découpes comportant chacune une extrémité angulaire pourvue d'un bord (29,30) qui est adjacent au doigt (25) correspondant de l'organe de verrouillage lorsque ledit organe de verrouillage et la plaque de commande (26) sont dans leurs positions de repos respectives.

6. Mécanisme d'articulation selon l'une quelconque des revendications précédentes, dans lequel l'organe de manoeuvre comprend un arbre central (19) sur lequel coulisse l'organe de verrouillage (20), ledit organe de verrouillage coulissant en outre dans un guide (21) solidaire du premier flasque.

7. Mécanisme d'articulation selon l'une quelconque des revendications précédentes, dans lequel le grain de mémorisation (46) comporte un pion (48) qui fait saillie axialement vers le deuxième flasque et sur lequel agit un bord d'appui extérieur (49) appartenant à la plaque de commande (26) lorsque ladite plaque de commande est déplacée dans sa deuxième position active sans rotation relative entre les premier et deuxième flasques, pour maintenir alors le grain de mémorisation en position d'engagement.

8. Mécanisme d'articulation selon l'une quelconque des revendications précédentes, dans lequel le guide en arc de cercle (51) qui coopère avec le grain de mémorisation (46) comprend un rebord qui est orienté radialement vers l'extérieur, contre lequel coulisse un rebord (50) orienté radialement vers l'intérieur appartenant au grain de mémorisation.

9. Mécanisme d'articulation selon l'une quelconque des revendications précédentes, dans lequel le guide circulaire (43) qui coopère avec le premier pion (17) du grain de verrouillage présente une butée (42) faisant saillie radialement vers l'intérieur au niveau de l'interruption de ce guide circulaire, uniquement d'un côté de ladite interruption, de façon que, lorsque le premier pion (17) du grain de verrouillage sort du premier guide radial (41), le deuxième flasque (11) puisse pivoter dans le sens angulaire de basculement (9) par rapport au premier flasque (10), puis dans un sens angulaire opposé, jusqu'à ce que le premier pion (17) du grain de verrouillage rencontre ladite butée (42) du guide circulaire, après quoi ledit premier pion peut s'engager à nouveau dans le premier guide radial (41).

10. Siège de véhicule comprenant d'une part, une assise (2) et d'autre part, un dossier (4) monté pivotant sur l'assise au moyen d'au moins un mécanisme d'articulation (5) selon l'une quelconque des revendications précédentes, dont les premier et deuxième flasques (10,11) sont solidarisés l'un avec l'assise et l'autre avec le dossier.
